# EUROPÄISCHE PATENTSCHRIFT

(11) **EP 3 578 158 B1**
(45) Veröffentlichungstag und Bekanntmachung des Hinweises auf die Patenterteilung: **12.10.2022**
(21) Anmeldenummer: 19175015.7
(22) Anmeldetag: 17.05.2019
(51) Int. Cl.: A61J 3/07, G01N 27/24

(54) **KAPSELFÜLLMASCHINE MIT REINIGUNGSEINHEIT UND FREMDKÖRPERDETEKTIERUNG**
CAPSULE FILLING MACHINE WITH CLEANING UNIT AND FOREIGN OBJECT DETECTION
MACHINE DE REMPLISSAGE DE CAPSULES AVEC UNITÉ DE NETTOYAGE ET DÉTECTEUR DE CORPS ÉTRANGER

(30) Priorität: 05.06.2018 EP 18176035
(43) Veröffentlichungstag der Anmeldung: 11.12.2019
(73) Patentinhaber: Harro Höfliger Verpackungsmaschinen GmbH, 71573 Allmersbach im Tal (DE)
(72) Erfinder: Jeschke, Michael, 71573 Allmersbach im Tal (DE); Höpfer, Jonas, 71573 Allmersbach im Tal (DE); Puppich, Thomas, 71573 Allmersbach im Tal (DE); Kiehn, Uwe, 71573 Allmersbach im Tal (DE); Lux, Andreas, 71573 Allmersbach im Tal (DE)
(74) Vertreter: Zurhorst, Stefan

(56) Entgegenhaltungen:
- WO-A1-2006/106012
- CN-A- 106 363 512
- CN-B- 104 546 486
- DE-A1-102010 038 544
- US-A- 2 732 987
- US-A- 3 024 582

## Beschreibung

Die Erfindung betrifft eine Kapselfüllmaschine zur Befüllung von Kapseln der im Oberbegriff des Anspruchs 1 angegebenen Gattung und eine Reinigungseinheit zur Verwendung in einer Kapselfüllmaschine.

Zum Schlucken vorgesehene Kapseln werden auf Kapselfüllmaschinen mit ausgewähltem Füllgut befüllt. Derartige Kapseln können beispielsweise aus Hartgelatine oder dergleichen hergestellt sein. Dabei bestehen die Kapseln aus einem Unterteil und einem darauf aufgesteckten Oberteil. Zum Befüllen mit Füllgut werden die anfänglich lose aufeinander gesteckten Kapselteile voneinander getrennt, und nach dem Befüllvorgang wieder verschlossen. Das Füllgut kann als Pulver, Granulat, Tabletten oder dgl. vorliegen. Derartige Kapseln werden insbesondere im Pharmabereich, aber auch im Bereich von Nahrungsergänzungsmitteln oder dergleichen eingesetzt.

Die Kapsel durchläuft die oben beschriebenen Prozessschritte auf einer sogenannten Bearbeitungsbahn. Umfassen die Kapselfüllmaschinen mehrere Bearbeitungsbahnen, ist eine gleichzeitige Bearbeitung mehrerer Kapseln möglich. Während des Bearbeitungsprozesses wechseln die Kapseln ihre jeweilige Bearbeitungsbahn nicht. Solange die Kapsel der Bearbeitungsbahn zugeordnet werden kann, können auch die Bearbeitungsinformationen der Kapsel der jeweiligen Bearbeitungsbahn zugeordnet werden. Kommt es dabei zu Abweichungen zwischen den gemessenen Realwerten und den vorgegebenen Sollwerten, kann der Maschinenbediener in den Prozess regulierend eingreifen.

Nach dem Befüllvorgang der Kapseln kann eine Reinigung der Kapseln notwendig sein, da durch die Befüllung mit dem trockenen und körnigen Füllgut die Außenseite der Kapseln einer Staubbelastung unterliegt. Bei bekannten Kapselfüllmaschinen sind hierfür separate, außerhalb der Kapselfüllmaschine angeordnete Kapselentstauber vorgesehen. Die Kapseln verlassen nach dem Füllvorgang ihre separaten Bearbeitungsbahnen und werden gemeinsam als Schüttgut von der Kapselfüllmaschine zum Kapselentstauber befördert und dort gereinigt. Nachteilig an bekannten Kapselfüllmaschinen ist, dass eine Zuordnung der Kapseln nach ihrer jeweiligen Bearbeitungsbahn nach deren Reinigung nicht mehr möglich ist. Ferner nehmen derartige Anordnungen aus Kapselfüllmaschine und dem Entstauber große Bereiche an Produktionsfläche ein, deren Bereitstellung und Unterhalt insbesondere unter Reinraumbedingungen im pharmazeutischen Bereich sehr kostspielig ist.

Zum Schutz für den Maschinenbediener vor hochwirksamen pharmazeutischen Wirkstoffen, aber auch bei besonders hohen Anforderungen an die Reinlichkeit der Arbeitsumgebung kann es notwendig sein, sowohl den Befüllvorgang als auch den Reinigungsvorgang der Kapseln in einer abgeschlossenen Atmosphäre durchzuführen. Diese abgeschlossene Atmosphäre wird im Fachjargon als "Containment" bezeichnet. Der Arbeitsbereich der Maschine ist dabei gegenüber der Maschinenumgebung nahezu vollständig abgedichtet und außerdem mit einem geringen Unterdruck gegenüber der Umgebung beaufschlagt. Dadurch können keine Staubpartikel, insbesondere keine Wirkstoffe, aus dem Containment in die Maschinenumgebung gelangen. Sind hingegen die Wirkstoffe für den Maschinenbediener unbedenklich, so kann auf ein Containment verzichtet werden. Somit ist es ausreichend, ein einfaches Maschinengehäuse gegen Verschmutzung der Arbeitsumgebung vorzusehen. Die zur Reinigung eingesetzten, bekannten Kapselentstauber sind getrennt von der Kapselfüllmaschine ausgebildet und zudem bei Bedarf mit einem eigenen Containment versehen. Derartige Kapselentstauber sind aufgrund ihrer aufwendigen Konstruktion, insbesondere unter Einhaltung erhöhter Sicherheitsanforderungen sehr aufwendig und kostenintensiv.

Der Erfindung liegt die Aufgabe zugrunde, eine Kapselfüllmaschine zur Befüllung von Kapseln derart weiterzuentwickeln, dass diese einen verringerten Bauraum aufweist und zugleich eine Zuordnung der Kapseln den jeweiligen Bearbeitungsbahnen auch noch nach der Reinigung der Kapseln ermöglicht.

Diese Aufgabe wird durch eine Kapselfüllmaschine mit den Merkmalen des Anspruchs 1 gelöst.

Weiterhin ist eine Reinigungseinheit offenbart, die eine Zuordnung der Kapseln den jeweiligen Bearbeitungsbahnen auch noch nach der Reinigung der Kapseln zulässt und eine einfache Demontage der Reinigungseinheit ermöglicht.

Die erfindungsgemäße Kapselfüllmaschine zur Befüllung von Kapseln umfasst mindestens zwei Bearbeitungsbahnen mit mehreren Bearbeitungsstationen. Eine der Bearbeitungsstationen umfasst eine Reinigungseinheit. Die Reinigungseinheit weist für jede der mindestens zwei Bearbeitungsbahnen je eine Durchführungsbahn mit einer Längsachse zum Durchführen von Kapseln auf. Demnach umfasst jede Bearbeitungsbahn auch je eine Durchführungsbahn. An jeder Durchführungsbahn ist mindestens ein Reinigungselement zum Reinigen der Kapseln angeordnet.

Die Kapsel wird in ihrem Bearbeitungsprozess zur Reinigung in der Reinigungseinheit durch die Durchführungsbahn gefördert. Dabei kontaktiert das Reinigungselement der Reinigungseinheit die Kapsel und streift die an der Kapsel befindlichen Staubpartikel ab. Durch das Reinigungselement wird die Kapsel beim Durchqueren der Durchführungsbahn von Staubpartikeln, insbesondere von Wirkstoffen gereinigt. Da jede Bearbeitungsbahn eine Durchführungsbahn umfasst, erfolgt entlang einer jeden Bearbeitungsbahn eine separate Reinigung der Kapseln. Die Kapseln bleiben also während der Reinigung auf ihrer Bearbeitungsbahn. Dadurch lässt sich jede Kapsel auch während bzw. unmittelbar nach ihrer Reinigung der entsprechenden Bearbeitungsbahn zuordnen.

Die Lage der Reinigungseinheit gegenüber den verschiedenen Bearbeitungsstationen ist grundsätzlich nicht festgelegt. Die Reinigungseinheit ist jedoch vorzugsweise nach der Befüllstation und insbesondere in der Auswurfstation zu positionieren. Dennoch kann auch eine andere Position der Reinigungseinheit im Prozessablauf zweckmäßig sein. Zudem können auch vorteilhaft mehrere Reinigungseinheiten in einer Kapselfüllmaschine vorgesehen sein.

Üblicherweise werden die Kapseln nach der Reinigung einer Qualitätskontrolle unterzogen. Dabei wird unter anderem das Gewicht der Kapseln gemessen. Da jede Kapsel ihrer entsprechenden Bearbeitungsbahn zugeordnet werden kann, können auch etwaige Bearbeitungsabweichungen, wie beispielsweise Fehler bezüglich des Kapselgewichtes, einer entsprechenden Bearbeitungsbahn zugewiesen werden. Dies ermöglicht dem Maschinenbediener eine schnelle Fehleranalyse, ob es sich um systematische oder lediglich zufällige Produktionsabweichungen handelt. Ist der Fehler systematischer Natur, kann der Maschinenbediener die Prozesseinstellungen der entsprechenden Bearbeitungsbahn anpassen und die unerwünschte Produktionsabweichung schnell und einfach beseitigen.

Die Reinigungseinheit weist vergleichsweise kleine Abmessungen auf und ist in der Kapselfüllmaschine integriert. Bildet die Kapselfüllmaschine ein Containment, so befindet sich auch das Reinigungselement im Containment der Kapselfüllmaschine. Durch die Reinigungseinheit kann auf einen herkömmlichen Kapselentstauber verzichtet werden, welcher im Stand der Technik als Stand-Alone-Lösung separat von der Kapselfüllmaschine angeordnet ist. Demnach entfällt gemäß der Erfindung der hierfür bislang erforderliche Bauraum, während die erfindungsgemäße Kapselfüllmaschine keinen größeren oder allenfalls nur geringfügig größeren Bauraum einnimmt.

Zur Reinigung der Reinigungseinheit kann diese demontiert werden. Aufgrund der vergleichsweise kleinen Abmessungen kann diese ggf. in einer Industriespülmaschine gereinigt werden, demnach eine aufwendige händische Reinigung dann nicht mehr notwendig ist. Ferner kann die Reinigungseinheit auch lediglich durch eine neue Reinigungseinheit ersetzt werden. Die gebrauchte Reinigungseinheit kann entweder entsorgt oder gereinigt und wiederverwendet werden.

Vorteilhaft ist das Reinigungselement als eine Bürste mit Borsten ausgebildet, wobei die Borsten mit ihren freien Enden nach innen in die Durchführungsbahn ragen. Beim Durchführen der Kapseln durch den Durchführungskanal kontaktieren die Borsten die Kapsel mit ihren freien Enden. Bei der Bewegung der Kapsel durch den Durchführungskanal streichen die Borsten mit ihren freien Enden, also mit den Spitzen der Borsten, die Staubpartikel von der Kapsel. Die Borsten können vorzugsweise auch unterschiedliche Borstenlängen aufweisen und verschieden tief in den Durchführungskanal hineinragen. Auf diese Weise können die Borstenlängen der Form und Größe der Kapsel angepasst werden und eine bessere Erreichbarkeit der Kapseloberfläche ermöglichen. In einer alternativen Ausführung kann das Reinigungselement vorzugsweise auch als Lappen oder als Abstreifelement aus Schaumstoff, Silikon, Edelstahl oder dgl. ausgebildet sein. Auch eine Kombination der Bürsten mit dem Lappen und/oder den Abstreifelementen in der Reinigungseinheit kann zweckmäßig sein.

Vorzugsweise sind an jeder Durchführungsbahn mindestens eine erste Bürste und eine zweite Bürste angeordnet. Durch die Erhöhung der Bürstenanzahl kann auch die Kontaktfläche, bestehend aus den freien Enden der Borsten und der Kapseloberfläche, erhöht werden. Dadurch kann eine effektivere und gründlichere Reinigung der Kapsel erfolgen. Bevorzugt sind die erste Bürste und die zweite Bürste in Umfangsrichtung der Längsachse der Durchführungsbahn zueinander versetzt angeordnet. Dadurch kann ein größerer Bereich der Kapseloberfläche durch die Borsten erreicht werden, so dass die Kapseloberfläche im Wesentlichen entlang ihres gesamten Umfanges gereinigt werden kann. Dabei sind die Borsten der versetzt zueinander angeordneten Bürsten in unterschiedliche Richtungen ausgerichtet. Vorteilhaft sind die erste Bürste und die zweite Bürste in Richtung der Längsachse der Durchführungsbahn versetzt zueinander angeordnet.

In einer vorteilhaften Weiterbildung der Kapselfüllmaschine sind mindestens eine und insbesondere eine erste und eine zweite an der Durchführungsbahn angeordnete Bürste um ihre jeweilige Drehachse drehend angetrieben. Dabei werden die Staubpartikel nicht nur nach unten in Richtung der Längsachse der Durchführungsbahn, sondern auch quer zur Längsachse der Durchführungsbahn von der Kapsel gewischt. Die sich drehenden Bürsten können dadurch die Staubpartikel sehr gründlich und schnell von der Kapsel abtragen. Durch die Querbewegung der Borsten können insbesondere Absätze an der Kapseloberfläche effizient gereinigt werden. Ferner kann die Drehachse der mindestens einen Bürste bevorzugt schräg zur Längsachse der jeweiligen Durchführungsbahn verlaufen. Dadurch wird die Kapsel mit der Drehung der Bürste durch die freien Enden der Borsten gereinigt und entlang des Durchführungskanals geschoben. Somit dient die schräg gestellte Bürste als Reinigungselement und zugleich als Fördermittel für die Kapsel.

Es ist vorteilhaft vorgesehen, dass die Reinigungseinheit eine Druckluftzuführung an der Durchführungsbahn zur Bereitstellung von Druckluft und einen Druckluftaustritt zum Ausblasen der Druckluft aufweist. Über die Druckluftzuführung wird die Druckluft in die Durchführungsbahn geblasen. Dabei werden Staubpartikel von den Kapseloberflächen und von den Reinigungselementen geblasen. Die dann mit Staubpartikeln angereicherte Luft wird mit der Druckluft aus dem Druckluftaustritt ausgeblasen. Die Druckluftzuführung ist vorzugsweise als eine Spaltöffnung an der Durchführungsbahn ausgebildet. Durch die Spaltöffnung wird die Druckluft gebündelt und mit vergleichsweise hoher Geschwindigkeit zielgenau gegen die Kapseloberfläche geblasen, wodurch eine bessere Ablösung der Staubpartikel von der Kapseloberfläche erfolgen soll. Durch den ständigen Druckluftaustausch über die Druckluftzuführung und den Druckluftaustritt wird eine permanente Grundeinigung der Reinigungseinheit ermöglicht.

Beim Befüllen der Kapseln können Fremdkörper in die Kapseln gelangen. Derartige Fremdkörper können beispielsweise aus Kunststoff oder Metallen bestehen, die bei Einnahme für den Menschen schädlich sein können. Es ist daher zwingend zu vermeiden, dass Tabletten mit Fremdkörpern auf den Verkaufsmarkt gelangen. Hierfür werden Fremdkörperdetektierungsvorrichtungen eingesetzt, die die Kapseln nach Ausgabe aus der Kapselfüllmaschine auf Fremdkörper überprüfen. Befindet sich in einer Kapsel ein Fremdkörper, wird die Kapsel aussortiert. Derartige Fremdkörperdetektierungsvorrichtungen sind im Stand der Technik als Stand-Alone Lösungen bekannt und nehmen neben der Kapselfüllmaschine zusätzlich im Unterhalt teure Produktionsfläche ein. Optional ist vorgesehen, dass die Kapselfüllmaschine eine Fremdkörperdetektierungsvorrichtung zur Erkennung von Fremdkörpern in den Kapseln umfasst, dass also mit anderen Worten die Fremdkörperdetektierungsvorrichtung in die Kapselfüllmaschine räumlich und funktional integriert ist. Dadurch kann Produktionsfläche eingespart werden, und die zur Befüllung von Kapseln anfallenden Betriebskosten können reduziert werden.

Für jede der mindestens zwei Bearbeitungsbahnen der Kapselfüllmaschine weist die Fremdkörperdetektierungsvorrichtung vorzugsweise je eine Erkennungsbahn zum Durchführen von Kapseln auf. An den Erkennungsbahnen ist vorteilhaft eine Detektiereinheit vorgesehen. Mittels der Detektiereinheit wird jede Kapsel beim Durchführen durch die Erkennungsbahn auf Fremdkörper geprüft. Dabei bleibt jede Kapsel auf ihrer Bearbeitungsbahn. Jede Kapsel lässt sich auch während bzw. unmittelbar nach ihrer Überprüfung auf Fremdkörper der entsprechenden Bearbeitungsbahn zuordnen. Vorzugsweise ist die Fremdkörperdetektierungsvorrichtung der Reinigungseinheit nachgelagert. Dadurch lässt sich jede Kapsel nach der Reinigung und nach der Fremkörperdetektierung der entsprechenden Bearbeitungsbahn zuordnen.

Eine bekannte Reinigungseinheit wird in CN106363512A beschrieben.

Verschiedene Ausführungsbeispiele der Erfindung werden im Folgenden anhand der Zeichnungen erläutert. Es zeigen:
- Fig. 1: in einer Draufsicht den Drehtisch einer erfindungsgemäß aus-geführten Kapselfüllmaschine mit einreihiger Kapselaufnahme und schematisch dargestellten Bearbeitungsstationen,
- Fig. 2: eine perspektivische Darstellung einer Reinigungseinheit zur Verwendung in einer Kapselfüllmaschine,
- Fig. 3: eine Schnittdarstellung eines Ausführungsbeispiels der Reinigungseinheit,
- Fig. 4: eine Schnittdarstellung der Reinigungseinheit entlang der Linie IV-IV in Fig. 2,
- Fig. 5: eine Schnittdarstellung der Reinigungseinheit entlang der Linie V-V in Fig. 2,
- Fig. 6 und Fig. 7: schematische Schnittdarstellungen von Ausführungsbeispielen der Reinigungseinheit mit passiven Bürsten,
- Fig. 8 und Fig. 9: schematische Schnittdarstellungen von Ausführungsbeispielen der Reinigungseinheit mit aktiven, drehenden Bürsten,
- Fig. 10: eine perspektivische Darstellung der Reinigungseinheit nach Fig. 2 mit einer nachgeschalteten Fremdkörperdetektierungsvorrichtung.

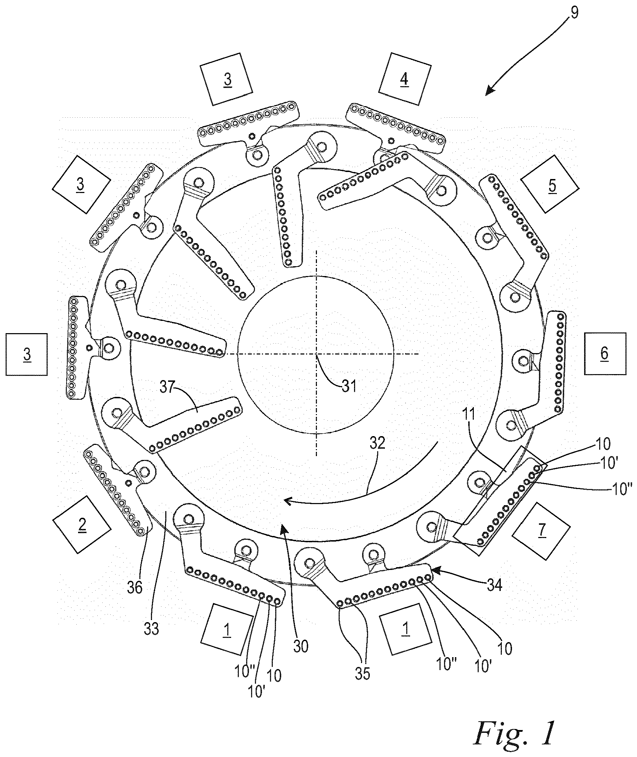

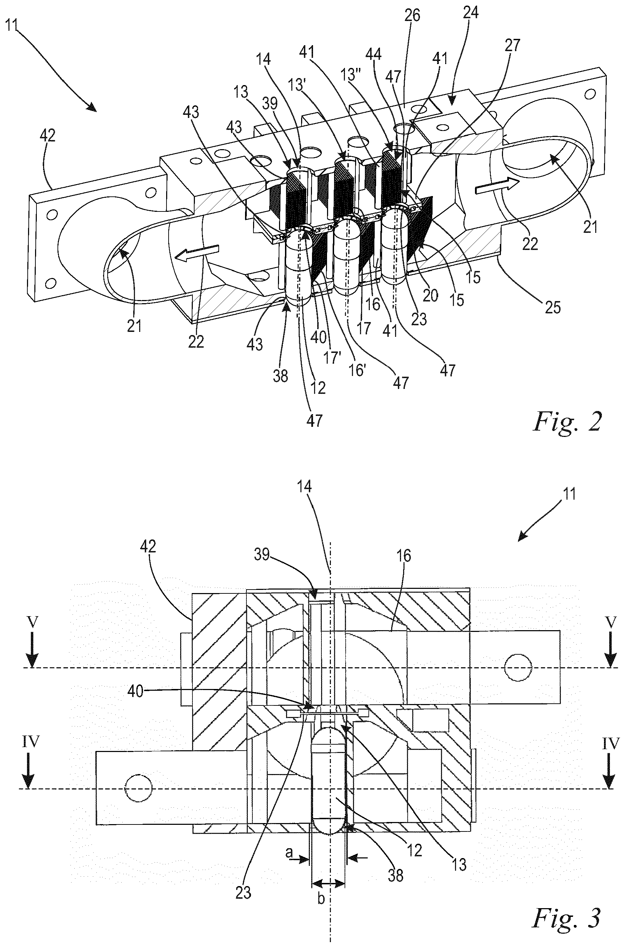

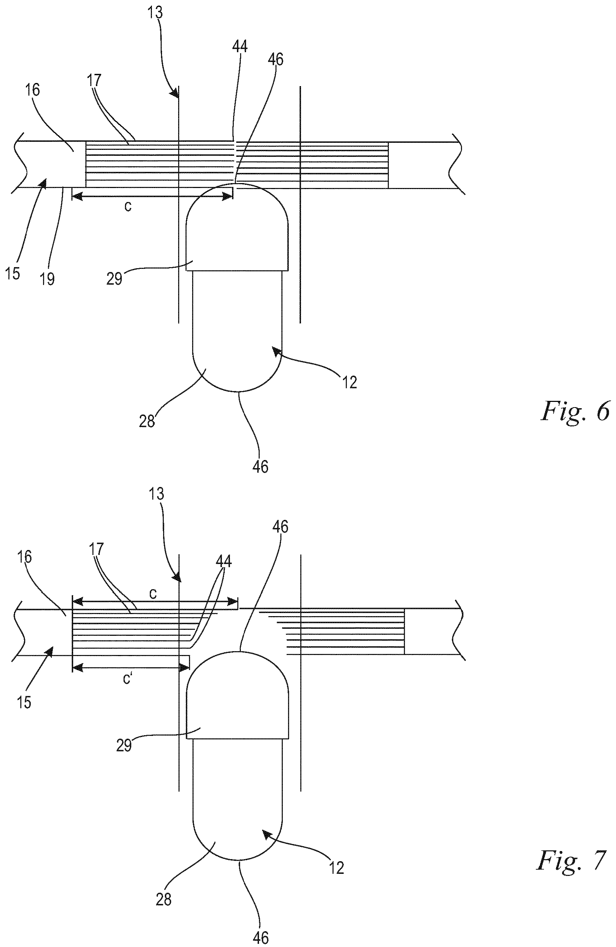

Fig. 1 zeigt in einer Draufsicht den zentralen Teil einer erfindungsgemäß ausgeführten Kapselfüllmaschine zum Befüllen von Kapseln 12 (Fig. 2) mit einem Füllgut. Das Füllgut kann in Form eines Pulvers, eines Granulats, Tabletten oder dgl. bereitgestellt sein. Dabei kann es sich um ein pharmazeutisches Präparat oder um ein Nahrungsergänzungsmittel handeln. Die Kapseln 12 bestehen aus einem Kapselunterteil 28 und einem darauf aufgesteckten Kapseloberteil 29 (Fig. 6), die beide beispielsweise aus Hartgelatine hergestellt sind.

Die Kapselfüllmaschine 9 nach Fig. 1 umfasst einen Drehtisch 30, der drehend um eine vertikale Drehachse 31 entsprechend einem Pfeil 32 in getakteten Schritten antreibbar ist. Auf einem Umfangsbereich 33 des Drehtisches 30 ist in gleichmäßigen Winkelabständen eine Anzahl von Kapselaufhahmen 34 angeordnet. Im gezeigten Ausführungsbeispiel sind insgesamt zehn Kapselaufhahmen 34 vorgesehen. Es kann aber auch eine andere Anzahl zweckmäßig sein. Im gezeigten bevorzugten Ausführungsbeispiel enthalten die Kapselaufnahmen 34 eine Reihe von Aufnahmetaschen 35 zur Aufnahme der Kapseln 12. Es können auch mehrere Reihen von Aufnahmetaschen 35 zweckmäßig sein.

Aus der Fig. 1 wird deutlich, dass jede Kapselaufnahme 34 aus je einer fest am Umfangsbereich 33 des Drehtisches 30 befestigten Unterteilaufnahme 36 sowie einer relativ dazu veschwenkbaren Oberteilaufnahme 37 besteht. Um den Drehtisch 30 herum sind mehrere feststehende, also nicht mit dem Drehtisch 30 mitdrehende Bearbeitungsstationen positioniert, die nur schematisch und nicht im Detail dargestellt sind. Die Anzahl der Bearbeitungsstationen korrespondiert mit der Anzahl von Kapselaufnahmen 34, so dass in jeder in Winkelschritten getakteten Drehposition des Drehtisches 30 jede Kapselaufnahme 34 im Zugriffsbereich je einer Bearbeitungsstation zu liegen kommt.

Gemäß dem gezeigten bevorzugten Ausführungsbeispiel sind die beiden ersten Bearbeitungsstationen jeweils eine Einsetz- und Trennstation 1, in denen provisorisch zusammengesteckte, aus Kapselunterteil 28 und Kapseloberteil 29 bestehende Leerkapseln in die Reihe von Aufnahmetaschen 35 eingesetzt werden, wobei dann auch eine Trennung des aufgesteckten Kapseloberteils 29 vom Kapselunterteil 28 erfolgt. Die nächste Bearbeitungsstation ist eine Ausscheidestation 2. Beim Übergang von der zweiten Einsetz- und Trennstation 1 zur Ausscheidestation 2 wird die Oberteilaufnahme 37 mit den darin gehaltenen Kapseloberteilen 29 gegenüber der Unterteilaufhahme 36 mit den darin gehaltenen Kapselunterteilen 28 verschwenkt. Fehlerhafte, nicht getrennte Leerkapseln werden in der Ausscheidestation 2 ausgeschieden.

Auf die Ausscheidestation 2 folgen hier insgesamt drei Füllstationen 3, in denen die in den Unterteilaufnahmen 36 gehaltenen Kapselunterteile 28 mit dem vorgesehenen Füllgut befüllt werden. Es kann ausreichen, nur eine oder zwei Füllstationen vorzusehen. Die Anordnung von mehreren, hier insgesamt drei Füllstationen 3 erlaubt die Befüllung von Kapselunterteilen 28 in einer Reihe von Aufnahmetaschen 35, wobei optional auch eine Befüllung mit unterschiedlichen Füllgütern vorgesehen sein kann.

Nach dem Durchlaufen der letzten Füllstation 3 erfolgt in einer Einschwenkstation 4 ein Einschwenken der Oberteilaufnahme 37 zurück in die fluchtende Lage relativ zur Unterteilaufhahme 36. In der darauf folgenden Schließstation 5 werden die Kapseln 12 verschlossen, indem die zuvor abgezogenen bzw. getrennten Kapseloberteile 29 zurück auf die befüllten Kapselunterteile 28 geschoben und verrastet werden. An die Schließstation 5 schließt sich eine Kontrollstation 6 an. In der Kontrollstation 6 werden geprüfte und für schlecht befundene Kapseln 12 ausgeworfen. In einer nachfolgenden Auswurfstation 7 werden die verbleibenden und für gut befundenen Kapseln 12 mittels nicht dargestellter Stößel oder anderer Auswurfmittel ausgestoßen. Beim Ausstoßen werden die Kapseln 12 durch eine hier nur schematisch angedeutete, weiter unten näher beschriebene Reinigungseinheit 11 befördert und anschließend der weiteren Verarbeitung zugeführt. Es kann aber auch zweckmäßig sein, die Reinigungseinheit 11 an anderer Stelle, insbesondere an einer anderen Station vorzusehen oder zusätzlich eine oder mehrere eigenständige Reinigungsstationen mit einer solchen Reinigungseinheit 11 in die Kapselfüllmaschine 9 zu integrieren.

Jede Kapsel 12 wird durch die Bearbeitungsstationen entlang einer sogenannten Bearbeitungsbahn 10, 10', 10" geführt. Eine solche Bearbeitungsbahn 10, 10', 10" ergibt sich aus der Positionierung der Kapseln 12 in den einzelnen Bearbeitungsstationen. Diese Positionierung wird bereits in der Einsetz- und Trennungsstation 1 durch das Einsetzen der Kapsel 12 in die Aufnahmetasche 35 der Kapselaufnahme 34 festgelegt. Somit entspricht die Anzahl der Bearbeitungsbahnen 10, 10', 10" der Anzahl der in den Kapselaufhahmen 34 vorgesehenen Aufnahmetaschen 35. Im bevorzugten Ausführungsbeispiel weist die Kapselfüllmaschine 9 korrespondierend zur Anzahl und Position der Aufnahmetaschen 35 zwölf Bearbeitungsbahnen 10, 10', 10" auf. Auch eine andere Anzahl an Bearbeitungsbahnen 10, 10', 10" kann zweckmäßig sein. Die Kapseln 12 halten ihre Positionierung während der Bearbeitungsvorgänge bei, d. h. die Kapseln 12 werden während der Bearbeitung nicht mit Kapseln 12 anderer Bearbeitungsbahnen 10, 10', 10" gemischt. Dadurch ist es möglich, dass jede Kapsel 12 einer einzelnen Bearbeitungsbahn 10, 10', 10" zugeordnet werden kann. Dies wird im Fachjargon als eine "bahnbezogene"-Bearbeitung bezeichnet.

Demnach ist die Reinigungseinheit 11 der erfindungsgemäßen Kapselfüllmaschine 9 derart ausgebildet, dass eine bahnbezogene Bearbeitung der Kapseln 12 bis unmittelbar nach deren Reinigung in der Reinigungseinheit 11 erfolgt. Nach dem Auswurf aus der Auswurfstation 7 werden die Kapseln 12 für die weitere Bearbeitung zusammengeführt, so dass die weitere Bearbeitung der Kapseln 12 nicht bahnbezogen ist. In einer alternativen erfindungsgemäßen Ausführung der Kapselfüllmaschine 9 erfolgt der Auswurf der Kapseln 12 hingegen bahnbezogen, so dass auch die der Reinigung der Kapseln 12 in der Reinigungseinheit 11 nachfolgenden Bearbeitungsschritte, wie beispielsweise das Wiegen des Kapselgewichtes, bahnbezogen erfolgen können.

Die Beschreibung der hier vorgesehenen Bearbeitungsstationen dient nur als Beispiel. Es können auch andere Bearbeitungsstationen mit anderen Aufgaben und/oder in anderer Anzahl vorgesehen sein. In jedem Fall umfasst die Kapselfüllmaschine 9 mindestens eine Reinigungseinheit 11, deren Ausgestaltung nachfolgend im Zusammenhang mit den Fig. 2 bis 9 beschrieben wird.

In Fig. 2 ist eine Reinigungseinheit 11 gezeigt, die in der Kapselfüllmaschine 9 in einer der Stationen, gemäß Fig. 1 in der Auswurfstation 7 vorgesehen ist. Die Reinigungseinheit 11 umfasst ein Gehäuse 24, das eine Gehäuseunterseite 25, eine Gehäuseoberseite 26 und eine Gehäuserückseite 42 aufweist. Die Gehäuseunterseite 25 und die Gehäuseoberseite 26 stehen in etwa senkrecht zur Gehäuserückseite 42 und sind durch diese miteinander verbunden. Zudem ist im Gehäuse 24 der Reinigungseinheit 11 eine Zwischenwand 27 zwischen der Gehäuseunterseite 25 und der Gehäuseoberseite 26 ausgebildet. Die Zwischenwand 27 ist über Verbindungsstege 41 gegenüber der Gehäuseunterseite 25 und der Gehäuseoberseite 26 abgestützt.

Wie in Fig. 2 gezeigt, umfasst die Reinigungseinheit 11 Durchführungsbahnen 13, 13', 13", welche sich jeweils von einer ersten Öffnung 38 an der Gehäuseunterseite 25 über eine Zwischenöffhung 40 an der Zwischenwand 27 bis hin zu einer zweiten Öffnung 39 an der Gehäuseoberseite 26 erstreckt. Im Ausführungsbeispiel sind die Öffnungen 38, 39, 40 kreisrund und begrenzen über ihre Durchmesser die Durchführungsbahn 13. Zudem sind die Öffnungen 38, 39, 40 jeweils mit einer Fase 43 versehen, die die Kapsel 12 beim Bewegen durch die Durchführungsbahn 13 zentrieren. Zwischen der Gehäuseunterseite 25, der Zwischenwand 27 und der Gehäuseoberseite 26 ist die Durchführungsbahn 13 durch die Verbindungsstege 41 begrenzt. Demnach dienen die Verbindungsstege 41 sowohl zur Abstützung der Zwischenwand 27 an der Gehäuseunterseite 25 und der Gehäuseoberseite 26 als auch zur Führung der Kapsel 12. Die Durchführungsbahn 13 ist in der Reinigungseinheit 11 derart ausgerichtet, dass ihre Längsachse 14 in etwa senkrecht zur Gehäuseunterseite 25, zur Zwischenwand 27 und zur Gehäuseoberseite 26 steht.

Die Anzahl der oben beschriebenen Durchführungsbahnen 13, 13', 13" richtet sich nach der Anzahl der in der Kapselfüllmaschine 9 vorgesehenen Bearbeitungsbahnen 10. Im Ausführungsbeispiel gemäß Fig. 2 sind lediglich drei Durchführungsbahnen 13, 13', 13" vorgesehen. Gemäß der Kapselfüllmaschine 9 nach Fig. 1 wären bei zwölf Bearbeitungsbahnen 10 auch zwölf Durchführungsbahnen 13 notwendig, um eine bahnbezogene Bearbeitung der Kapseln 12 auch nach der Reinigung gewährleisten zu können.

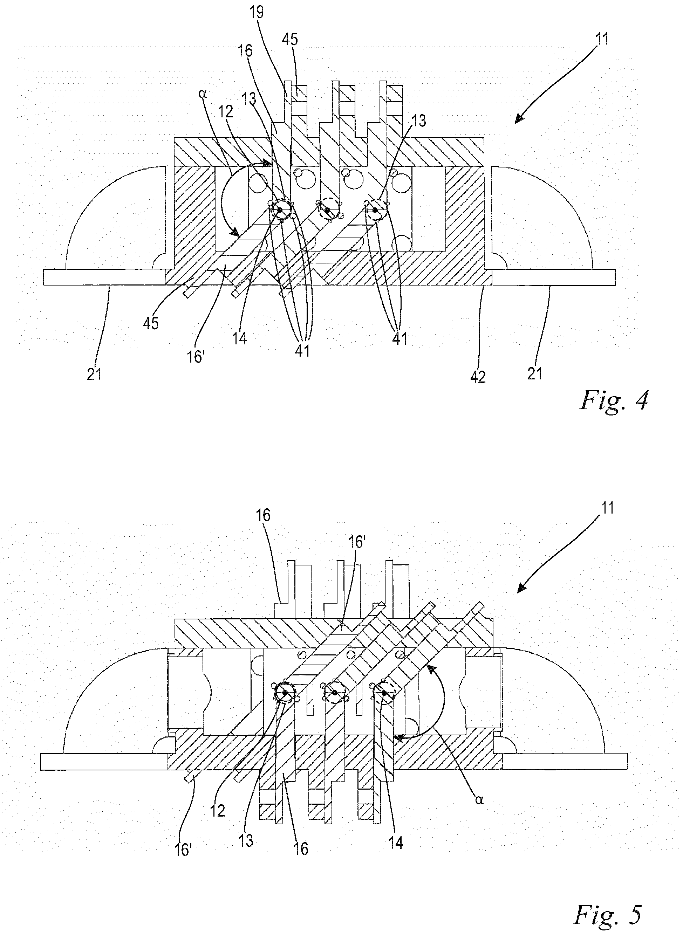

Wie in Fig. 2 gezeigt, umfasst die Reinigungseinheit 11 Reinigungselemente 15. Im Ausführungsbeispiel sind die Reinigungselemente 15 als Bürsten 16 mit einer Vielzahl von Borsten 17 ausgebildet. Die Bürsten 16 sind an ihrem Bürstenschaft 19 am Gehäuse 24 der Reinigungseinheit 11 befestigt (Fig. 3). Es kann zweckmäßig sein, als Bürstenbefestigung eine Verschraubung vorzusehen, wodurch die Bürsten 16 wieder vom Gehäuse 24 gelöst und gegebenenfalls ausgetauscht werden können. Die Bürsten sind derart angeordnet, dass deren Borsten 17 mit ihren freien Enden 44 in die Durchführungsbahn 13 hineinragen. Wie in den Figuren 3 und 4 gezeigt sind an jeder Durchführungsbahn 13 vier Bürsten 16, 16' (Figuren 3 bis 5) vorgesehen. Zwischen der Gehäuseunterseite 25 und der Zwischenwand 27 ist ein erstes Paar Bürsten 16, 16' angeordnet, und zwischen der Zwischenwand 27 und der Gehäuseoberseite 26 ist ein zweites Paar Bürsten 16, 16' angeordnet. Die Bürsten 16, 16' eines Bürstenpaares sind jeweils zueinander in Umfangsrichtung der Längsachse 14 versetzt zueinander angeordnet. Die zwei Bürstenpaare selbst sind in Richtung der Längsachse 14 der Durchführungsbahn 13 versetzt zueinander angeordnet.

Zur Reinigung der Kapsel 12 wird diese durch die Durchführungsbahn 13 mittels eines nicht gezeigten Schieberelementes hindurchgeschoben. Bei der bevorzugten Positionierung der Reinigungseinheit 11 in der Auswurfstation 7 gemäß Fig. 1 dienen die dort zum Einsatz kommenden Auswurfstößel als die vorgenannten Schieberelemente. Dabei wird die Kapsel 12 zuerst durch die erste Öffnung 38 der Gehäuseunterseite 25 und an dem ersten Bürstenpaar vorbeigeschoben. Dabei kontaktieren die Bürsten 16, 16' mit ihren freien Enden 44 die Kapseln 12 und streifen die Staubpartikel von der Kapseloberfläche herunter. Die Kapsel 12 wird weiter durch die Zwischenöffhung 40 der Zwischenwand 27 hindurch und an dem zweiten Paar Bürsten 16, 16' vorbeigeschoben. Da das zweite Paar Bürsten 16, 16' in Umfangsrichtung der Längsachse 14 versetzt zum ersten Paar Bürsten angeordnet ist, werden durch das zweite Paar Bürsten 16, 16' auch die Staubpartikel an den noch nicht gereinigten Flächen der Kapsel 12 abgestreift. Die Kapsel 12 wird weiter durch die zweite Öffnung 39 an der Gehäuseoberseite 26 hindurchgeschoben und in gereinigtem Zustand der Weiterbearbeitung in der Kapselfüllmaschine 9 bereitgestellt. So können die Kapseln 12 beispielsweise über einzelne, bahnbezogene Rutschen einer Kontrollstation zugeführt werden, in welcher beispielsweise das Gewicht der Kapseln 12 erfasst wird. Ferner kann bei Abweichungen der Sollwerte, sofern der Fehler beispielsweise auf die Füllmenge der Kapseln 12 zurückzuführen ist, die entsprechende Füllstation nachjustiert werden. Die Reinigung in der Reinigungsstation 11 ermöglicht eine bahnbezogene Reinigung, so dass auch nach der Kapselreinigung eine schnelle und einfache Fehlerfindung möglich ist. In einer alternativen Ausführung der Reinigungseinheit 11 wird die Kapsel 12 nicht vollständig nach oben aus der zweiten Öffnung 39 der Kapseloberseite 26 zur Weiterverarbeitung herausgeschoben, sondern nach dem Abstreifen an den Bürsten 16, 16' wieder durch die erste Öffnung 38 zurückgeschoben und eben an der Gehäuseunterseite 25 zur Weiterverarbeitung bereitgestellt. Sofern die Reinigungseinheit 11 nicht in der Auswurfstation 7, sondern vorher positioniert ist, kann das Zurückschieben nach unten auch dazu genutzt werden, die gereinigten Kapseln unter Beibehaltung ihrer jeweiligen Bearbeitungsbahnen 10, 10', 10" zurück in die zugeordneten Aufnahmetaschen 35 zu befördern. Die Durchführungsbahn 13 ist derart gestaltet, dass beim Durchführen der Kapsel 12 durch die Durchführungsbahn 13 die Kapsel 12 mit ihrer Längsachse 47 parallel, insbesondere koaxial zur Längsachse 14 der Durchführungsbahn 13 ausgerichtet ist. Es kann jedoch auch zweckmäßig sein, die Durchführungsbahn 13 derart auszubilden, dass beim Durchführen der Kapsel 12 durch die Durchführungsbahn 13 die Kapsel 12 mit ihrer Längsachse 47 quer zur Längsachse 14 der Durchführungsbahn 13 ausgerichtet ist.

Wie in Fig. 2 gezeigt, umfasst die Reinigungseinheit 11 eine Druckluftzuführung 20 zur Bereitstellung von Druckluft 22. Die Druckluftzuführung 20 ist im Ausführungsbeispiel als eine Spaltöffnung 23 in der Zwischenöffnung 40 der Zwischenwand 27 ausgebildet. Beim Vorbeischieben der Kapseln 12 an der Zwischenwand 27 werden die Kapseln 12 mit Druckluft 22 angeblasen. Dadurch können die Staubpartikel von den Kapseln 12 heruntergeblasen werden, wodurch die Reinigung der Kapseln 12 begünstigt wird. Die Druckluft 22 kann an einem im Gehäuse 24 vorgesehenen Druckluftaustritt 21 wieder entweichen. Durch die Zirkulation der Druckluft 22 von der Druckluftzuführung 20 über den Druckluftaustritt 21 findet ein permanenter Luftaustausch statt. Die Reinigungseinheit 11 kann zudem eine in Fig. 2 nicht gezeigte Absaugung umfassen. Die Absaugung saugt aktiv, beispielsweise durch ein Gebläse, die Druckluft 22 über den Druckluftaustritt 21 aus der Reinigungseinheit 11 heraus, und fördert dadurch den Austausch der Druckluft 21. Dadurch wird die mit Staubpartikeln angereicherte Luft aus der Reinigungseinheit 11 geblasen, so dass sich eine ständige Reinigung der Reinigungseinheit 11 einstellt. Zudem ermöglicht die Druckluft 22 eine zusätzliche Reinigung der Reinigungselemente 15, insbesondere der Bürsten 16, 16'.

Die Reinigungseinheit 11 ist im Ausführungsbeispiel im Spritzgussverfahren aus einem Kunststoffmaterial hergestellt. Durch die damit verbundenen niedrigen Produktionskosten ist die Reinigungseinheit 11 als Wegwerfteil ausgelegt. Es kann auch zweckmäßig sein, die Reinigungseinheit 11 aus höherwertigen Materialien, insbesondere aus Metallen, bevorzugt Edelstählen herzustellen und diese nach einer Reinigung, beispielsweise in einer Industriespülmaschine, wiederzuverwenden.

In Fig. 3 ist eine Schnittdarstellung einer Reinigungseinheit 11 gezeigt, wobei die Schnittebene entlang der Längsachse 14 der Führungsbahn 13 verläuft und etwa senkrecht zur Gehäuserückseite 42 der Reinigungseinheit 11 steht. Wie in Fig. 3 gezeigt, besitzt die Durchführungsbahn 13 einen minimalen Durchmesser a, der im Ausführungsbeispiel durch den Durchmesser der Öffnungen 38, 39, 40 gegeben ist. Die Kapsel 12 weist einen Durchmesser b auf, der kleiner ist als der Durchmesser a der Durchführungsbahn 13. Dadurch wird gewährleistet, dass die Kapsel 12 ohne wesentliche Verformungen durch die Durchführungsbahn 13 geschoben werden kann und nicht beschädigt wird.

In Fig. 4 ist die Reinigungseinheit 11 in geschnittener Darstellung zwischen dem Gehäuseunterteil 25 und der Zwischenwand 27 gezeigt. In der Darstellung wird deutlich, dass jeweils zwei Bürsten 16, 16' ein in Umfangsrichtung der Längsachse 14 versetztes Bürstenpaar bilden. Dabei schließen die Bürsten 16, 16' einen Winkel α ein, der vorzugsweise kleiner 180°, insbesondere kleiner 150°, bevorzugt etwa 130° beträgt. Die Bürsten 16, 16' sind an ihrem Bürstenschaft 19 an den am Gehäuse 24 ausgebildeten Bürstenaufnahmen 45 befestigt. Die in Fig. 5 gezeigte Schnittdarstellung zeigt die Reinigungseinheit 11 in einer Schnittebene zwischen der Zwischenwand 27 und dem Gehäuseoberteil 26. Wie in Fig. 5 gezeigt, ist das zweite Bürstenpaar ebenfalls aus zwei zueinander im Umfangsrichtung der Längsachse 14 versetzt angeordneten Bürsten 16, 16' gebildet. Die Bürsten 16, 16' des zweiten Bürstenpaares schließen ebenfalls einen Winkel α ein. In Fig. 5 ist deutlich zu erkennen, dass das erste Bürstenpaar gegenüber dem zweiten Bürstenpaar sowohl in Umfangsrichtung der Längsachse 14 als auch in Richtung der Längsachse 14 versetzt angeordnet ist. Dadurch sind die Bürsten 16, 16' an der Durchführungsbahn 13 so angeordnet, dass deren Borsten 17 die vollständige Oberfläche der Kapsel 12 kontaktieren und reinigen können.

Zudem ist in den Fig. 4 und 5 deutlich zu erkennen, dass die Abstände der Verbindungsstege 41 einer Durchführungsbahn 13 ausreichend groß sind, dass die Borsten 17, 17' der Bürsten 16, 16' zwischen den Verbindungsstegen 41 angeordnet werden können und somit in die Durchführungsbahn 13 hineinragen. Ferner ist der Abstand zwischen den Verbindungsstegen 41 so gering, dass die Kapsel 12 beim Reinigen durch die Verbindungsstege 41 abgestützt wird, und dabei ein Herausdrücken der Kapseln 12 aus der Durchführungsbahn 13 vermieden wird.

In Fig. 6 ist eine schematische Darstellung eines passiven Reinigungselementes 15 gezeigt. Das passive Reinigungselement 15 ist als feststehende Bürste 16 ausgeführt. Die Bürste 16 ist so zur Durchführungsbahn 13 angeordnet, dass ihre Borsten 17 an den freien Enden 44 in die Durchführungsbahn 13 hineinragen und beim Durchführen der Kapsel 12 von dieser berührt werden. Im Ausführungsbeispiel der Fig. 6 besitzen die Borsten 17 der Bürste 16 die gleiche Länge c. In einer alternativen Ausführung nach Fig. 7 besitzen die Borsten 17 der Bürste 16 unterschiedliche Längen c, c'. Die langen Borsten 17 ragen dabei so weit in die Durchführungsbahn 13 hinein, dass diese die Stirnseiten 46 der Kapsel 12 kontaktieren und reinigen. Die kurzen Borsten 17 hingegen sind lediglich so lang, dass die Borsten 17 im Wesentlichen nur mit ihren freien Enden die Kapseloberfläche kontaktieren, nicht jedoch mit ihren Längsseiten. Es hat sich gezeigt, dass die Staubpartikel dadurch besser von der Kapseloberfläche abgestreift werden können.

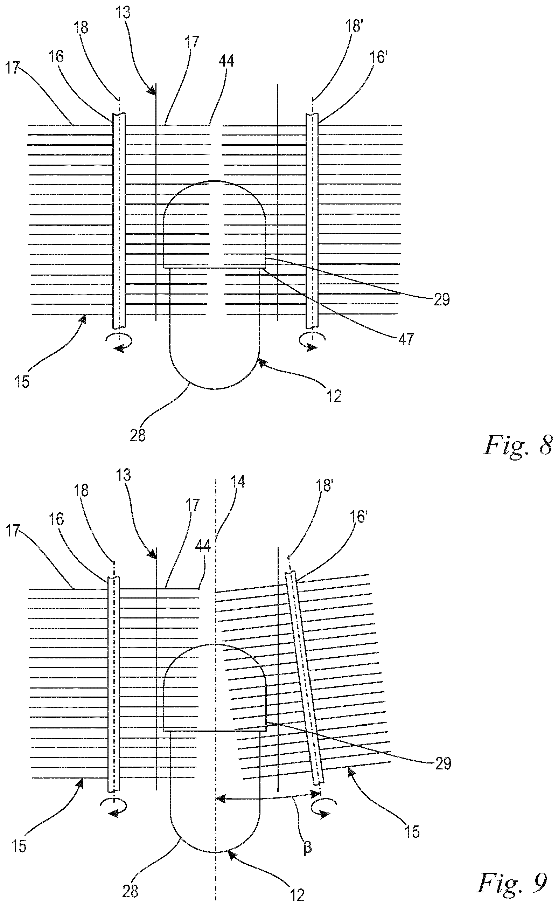

In Fig. 8 ist eine Schnittdarstellung eines Ausführungsbeispiels der aktiven Reinigungselemente 15 gezeigt. Die Reinigungselemente 15 sind als drehende Bürsten 16, 16' ausgebildet. Die Bürsten 16, 16' sind derart in der Reinigungseinheit 11 angeordnet, dass deren Drehachsen 18, 18' parallel zur Längsachse 14 der Durchführungsbahn 13 verlaufen. Die Bürsten 16, 16' werden von einer nicht dargestellten Antriebseinheit um die Drehachse 18, 18' der Bürsten 16, 16' drehend angetrieben. Die Borsten 17, 17' streifen dadurch nicht nur die Staubpartikel von der Kapseloberfläche in Längsrichtung, sondern auch in Querrichtung zur Durchführungsbahn 13 ab. Das Kapseloberteil 29 und das Kapselunterteil 28 bilden an ihrem Übergang einen Kapselabsatz 47, welcher besonders schwer zu reinigen ist. Durch die sich in Querrichtung bewegenden Borsten 17, 17' der drehenden Bürsten 16, 16' kann insbesondere an dem Kapselabsatz 47 eine bessere Reinigung erzielt werden. Im Ausführungsbeispiel sind an der Durchführungsbahn 13 zwei drehende Bürsten 16, 16' angeordnet. Es kann auch eine andere Anzahl drehender Bürsten 16, 16' zweckmäßig sein. Im Ausführungsbeispiel besitzen die Bürsten 16, 16' verschiedene Drehrichtungen, so dass eine Drehung der Kapsel 12 im Wesentlichen vermieden wird.

Die Fig. 9 zeigt eine Weiterbildung der Anordnung der Bürsten 16, 16' nach Fig. 8. Dabei verläuft zumindest eine der Bürsten 16' schräg zur Längsachse 14 der Durchführungsbahn 13. Es kann auch zweckmäßig sein, die zweite Bürste 16 oder mehrere Bürsten schräg zur Längsachse 14 der Durchführungsbahn 13 anzuordnen. Die Drehachse 18' der Bürste 16' schließt mit der Längsachse 14 einen Winkel β ein. Der Winkel β beträgt bevorzugt höchstens 30°, insbesondere in etwa 6°. Durch die Schrägstellung der Drehachse 18' gegenüber der Durchführungsbahn 13 kann die Bürste 16' die Kapsel 12 durch die Durchführungsbahn 13 befördern. Dadurch dient die Bürste 16' sowohl der Reinigung als auch der Beförderung der Kapsel 12. Somit kann auf herkömmliche Beförderungsmittel, wie Kapselschieber, verzichtet werden.

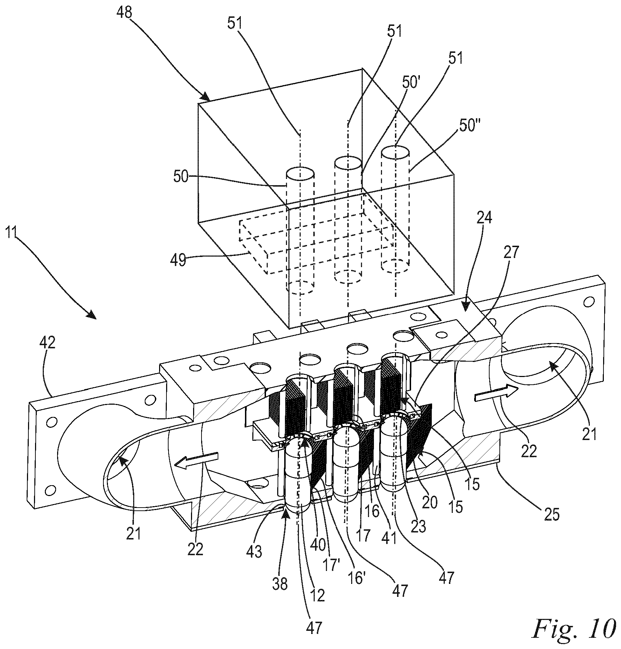

In Fig. 10 ist eine Fremdkörperdetektierungsvorrichtung 48 gezeigt, welche als zusätzliche Option in die zuvor beschriebene, erfindungsgemäße Kapselfüllmaschine 9 integriert ist. Die Fremdkörperdetektierungsvorrichtung 48 ist der Reinigungseinheit 11 unmittelbar nachgelagert. Es kann jedoch auch in einer alternativen Ausführungsform zweckmäßig sein, die Fremdkörperdetektierungsvorrichtung 48 an anderer Stelle vorzusehen. Die Fremdkörperdetektierungsvorrichtung umfasst für jede der Bearbeitungsbahnen 10, 10', 10" der Kapselfüllmaschine 9 eine Erkennungsbahn 50, 50', 50". Im bevorzugten Ausführungsbeispiel gemäß Fig. 10 sind drei Erkennungsbahnen 50, 50', 50" mit jeweils einer Längsachse 51 gezeigt. Bei einer anderen Anzahl an Bearbeitungsbahnen ist es erforderlich, die Anzahl der Erkennungsbahnen 50, 50', 50" entsprechend anzupassen. Die Fremdkörperdetektierungsvorrichtung 48 umfasst eine an den Erkennungsbahnen 50, 50', 50" angeordnete Detektiereinheit 49. Bei der Überprüfung der Kapseln 12 auf Fremdkörper werden die Kapseln 12 durch die Erkennungsbahnen 50, 50', 50" in Richtung ihrer Längsachsen 51 geschoben. Beim Passieren der Detektiereinheit 49 werden die Kapseln 12 auf Fremdkörper überprüft. Hierzu wird bevorzugt die induktive Messfeldanalyse eingesetzt. Diese Messmethode hat keinen Einfluss auf den Füllstoff der Kapsel 12 oder die Kapsel 12 selbst. Wird ein Fremdkörper in einer Kapsel 12 detektiert, wird diese aussortiert. Mittels der integrierten Fremdkörperdetektierungsvorrichtung 48 kann eine bahnbezogene Fremdkörperdetektierung in der Kapselfüllmaschine 9 durchgeführt werden. In einer alternativen Ausführung der Kapselfüllmaschine 9 kann es auch zweckmäßig sein, eine nicht bahnbezogene Fremdkörperdetektierungsvorrichtung vorzusehen. Eine weitere, nicht als Erfindung beanspruchte Möglichkeit besteht außerdem darin, die hier beschriebene Fremdkörperdetektierungsvorrichtung 48 auch ohne die Reinigungseinheit 11 in einer Kapselfüllmaschine 9 einzusetzen.

## Patentansprüche

1. Kapselfüllmaschine zur Befüllung von Kapseln,
umfassend mindestens zwei Bearbeitungsbahnen (10, 10', 10") mit mehreren Bearbeitungsstationen (1, 2, 3, 4, 5, 6, 7, 8),
**dadurch gekennzeichnet, dass** eine der Bearbeitungsstationen (8) eine Reinigungseinheit (11) umfasst,
dass die Reinigungseinheit (11) für jede der mindestens zwei Bearbeitungsbahnen (10, 10', 10") eine Durchführungsbahn (13, 13', 13") mit einer Längsachse (14) zum Durchführen von Kapseln (12) aufweist,
und dass an jeder Durchführungsbahn (13, 13', 13") mindestens ein Reinigungselement (15) zum Reinigen der Kapseln (12) angeordnet ist.

2. Kapselfüllmaschine nach Anspruch 1,
**dadurch gekennzeichnet, dass** das Reinigungselement (15) als eine Bürste (16, 16') mit Borsten (17, 17') ausgebildet ist, wobei die Borsten (17, 17') mit ihren freien Enden nach innen in die Durchführungsbahn (13) ragen.

3. Kapselfüllmaschine nach Anspruch 2,
**dadurch gekennzeichnet, dass** an jeder Durchführungsbahn (13) mindestens eine erste Bürste (16) und eine zweite Bürste (16') angeordnet sind.

4. Kapselfüllmaschine nach Anspruch 3,
**dadurch gekennzeichnet, dass** die erste Bürste (16) und die zweite Bürste (16') in Umfangsrichtung der Längsachse (14) der Durchführungsbahn (13) zueinander versetzt angeordnet sind.

5. Kapselfüllmaschine nach Anspruch 3 oder 4,
**dadurch gekennzeichnet, dass** die erste Bürste (16) und die zweite Bürste (16') in Richtung der Längsachse (14) der Durchführungsbahn (13) versetzt zueinander angeordnet sind.

6. Kapselfüllmaschine nach einem der Ansprüche 2 bis 5,
**dadurch gekennzeichnet, dass** mindestens eine und insbesondere eine erste und eine zweite an der Durchführungsbahn (13) angeordnete Bürste (16, 16') um ihre jeweilige Drehachse (18, 18') drehend angetrieben sind.

7. Kapselfüllmaschine nach Anspruch 6,
**dadurch gekennzeichnet, dass** die Drehachse (18, 18') der mindestens einen Bürste (16) schräg zur Längsachse (14) der jeweiligen Durchführungsbahn (13, 13', 13") verläuft.

8. Kapselfüllmaschine nach einem der Ansprüche 1 bis 7,
**dadurch gekennzeichnet, dass** die Reinigungseinheit (11) eine Druckluftzuführung (20) an der Durchführungsbahn (13) zur Bereitstellung von Druckluft (22) und einen Druckluftaustritt (21) zum Ausblasen der Druckluft (22) aufweist.

9. Kapselfüllmaschine nach Anspruch 8,
**dadurch gekennzeichnet, dass** die Druckluftzuführung (20) als eine Spaltöffnung (23) an der Durchführungsbahn (13) ausgebildet ist.

10. Kapselfüllmaschine nach einem der Ansprüche 1 bis 9,
**dadurch gekennzeichnet, dass** die Kapselfüllmaschine (9) eine Fremdkörperdetektierungsvorrichtung (48) zur Erkennung von Fremdkörpern in den Kapseln (12) umfasst.

11. Kapselfüllmaschine nach Anspruch 10,
**dadurch gekennzeichnet, dass** für jede der mindestens zwei Bearbeitungsbahnen (10, 10', 10") der Kapselfüllmaschine (9) die Fremdkörperdetektierungsvorrichtung (48) eine Erkennungsbahn (50, 50', 50") zum Durchführen von Kapseln (12) aufweist, und dass an den Erkennungsbahnen (50, 50', 50") eine Detektiereinheit (49) vorgesehen ist.

12. Kapselfüllmaschine nach Anspruch 10 oder 11,
**dadurch gekennzeichnet, dass** die Fremdkörperdetektierungsvorrichtung (48) der Reinigungseinheit (11) nachgelagert ist.

## Claims

1. Capsule filling machine for filling capsules,
comprising at least two processing paths (10, 10', 10") with a plurality of processing stations (1, 2, 3, 4, 5, 6, 7, 8),
**characterized in that** one of the processing stations (8) comprises a cleaning unit (11), **in that** the cleaning unit (11) has, for each of the at least two processing paths (10, 10', 10"), a leadthrough path (13, 13', 13") with a longitudinal axis (14) for leading through capsules (12),
and **in that** at least one cleaning element (15) for cleaning the capsules (12) is arranged on each leadthrough path (13, 13', 13").

2. Capsule filling machine according to Claim 1,
**characterized in that** the cleaning element (15) is designed as a brush (16, 16') with bristles (17, 17'), where the bristles (17, 17') protrude, by way of their free ends, inward into the leadthrough path (13).

3. Capsule filling machine according to Claim 2,
**characterized in that** at least one first brush (16) and one second brush (16') are arranged on each leadthrough path (13).

4. Capsule filling machine according to Claim 3,
**characterized in that** the first brush (16) and the second brush (16') are arranged offset in relation to one another in the circumferential direction of the longitudinal axis (14) of the leadthrough path (13).

5. Capsule filling machine according to Claim 3 or 4,
**characterized in that** the first brush (16) and the second brush (16') are arranged offset in relation to one another in the direction of the longitudinal axis (14) of the leadthrough path (13).

6. Capsule filling machine according to one of Claims 2 to 5,
**characterized in that** at least one and, in particular, one first and one second brush (16, 16') which are arranged on the leadthrough path (13) are driven in rotation about their respective rotation axis (18, 18').

7. Capsule filling machine according to Claim 6,
**characterized in that** the rotation axis (18, 18') of the at least one brush (16) runs obliquely in relation to the longitudinal axis (14) of the respective leadthrough path (13, 13', 13").

8. Capsule filling machine according to one of Claims 1 to 7,
**characterized in that** the cleaning unit (11) has a compressed-air feed (20) on the leadthrough path (13) for providing compressed air (22) and has a compressed-air outlet (21) for blowing out the compressed air (22).

9. Capsule filling machine according to Claim 8,
**characterized in that** the compressed-air feed (20) is designed as a gap opening (23) on the leadthrough path (13).

10. Capsule filling machine according to one of Claims 1 to 9,
**characterized in that** the capsule filling machine (9) comprises a foreign body detection apparatus (48) for identifying foreign bodies in the capsules (12).

11. Capsule filling machine according to Claim 10,
**characterized in that** the foreign body detection apparatus (48) has, for each of the at least two processing paths (10, 10', 10") of the capsule filling machine (9), an identification path (50, 50', 50") for leading through capsules (12), and **in that** a detecting unit (49) is provided on the identification paths (50, 50', 50").

12. Capsule filling machine according to Claim 10 or 11,
**characterized in that** the foreign body detection apparatus (48) is fitted downstream of the cleaning unit (11).

## Revendications

1. Machine de remplissage de capsules destinée au remplissage de capsules, ladite machine comprenant au moins deux voies de traitement (10, 10', 10") pourvues d'une pluralité de postes de traitement (1, 2, 3, 4, 5, 6, 7, 8),
**caractérisée en ce que**
l'un des postes de traitement (8) comprend une unité de nettoyage (11),
l'unité de nettoyage (11) comporte pour chacune des au moins deux voies de traitement (10, 10', 10") une voie de passage (13, 13', 13") qui présente un axe longitudinal (14) et qui est destinée au passage de capsules (12), et
au moins un élément de nettoyage (15) destiné au nettoyage des capsules (12) est disposé au niveau de chaque voie de passage (13, 13', 13").

2. Machine de remplissage de capsules selon la revendication 1,
**caractérisée en ce que** l'élément de nettoyage (15) est conçu comme une brosse (16, 16') pourvue de poils (17, 17'), les poils (17, 17') faisant saillie au niveau de leurs extrémités libres vers l'intérieur dans la voie de passage (13).

3. Machine de remplissage de capsules selon la revendication 2,
**caractérisée en ce qu'**au moins une première brosse (16) et une deuxième brosse (16') sont disposées au niveau de chaque voie de passage (13).

4. Machine de remplissage de capsules selon la revendication 3,
**caractérisée en ce que** la première brosse (16) et la deuxième brosse (16') sont décalées l'une de l'autre dans la direction circonférentielle de l'axe longitudinal (14) de la voie de passage (13).

5. Machine de remplissage de capsules selon la revendication 3 ou 4,
**caractérisée en ce que** la première brosse (16) et la deuxième brosse (16') sont décalées l'une de l'autre dans la direction de l'axe longitudinal (14) de la voie de passage (13).

6. Machine de remplissage de capsules selon l'une des revendications 2 à 5, **caractérisée en ce qu'**au moins une brosse, et notamment des première et une deuxième, brosses (16, 16'), disposées au niveau de la voie de passage (13) sont entraînées en rotation sur leur axe de rotation respectif (18, 18').

7. Machine de remplissage de capsules selon la revendication 6, **caractérisée en ce que** l'axe de rotation (18, 18') de l'au moins une brosse (16) forme un angle par rapport à l'axe longitudinal (14) de la voie de passage respective (13, 13', 13").

8. Machine de remplissage de capsules selon l'une des revendications 1 à 7, **caractérisée en ce que** l'unité de nettoyage (11) comporte au niveau de la voie de passage (13) une alimentation en air comprimé (20) destinée à fournir de l'air comprimé (22) et une sortie d'air comprimé (21) destinée à souffler l'air comprimé (22).

9. Machine de remplissage de capsules selon la revendication 8,
**caractérisée en ce que** l'alimentation en air comprimé (20) est réalisée sous la forme d'une ouverture à fente (23) au niveau de la voie de passage (13).

10. Machine de remplissage de capsules selon l'une des revendications 1 à 9, **caractérisée en ce que** la machine de remplissage de capsules (9) comprend un dispositif de détection de corps étrangers (48) destiné à détecter des corps étrangers dans les capsules (12).

11. Machine de remplissage de capsules selon la revendication 10, **caractérisée en ce que**, pour chacune des au moins deux voies de traitement (10, 10', 10") de la machine de remplissage de capsules (9), le dispositif de détection de corps étrangers (48) comporte une voie de détection (50, 50', 50") destinée au passage de capsules (12), et **en ce qu'**une unité de détection (49) est prévue au niveau des voies de détection (50, 50', 50").

12. Machine de remplissage de capsules selon la revendication 10 ou 11, **caractérisée en ce que** le dispositif de détection de corps étrangers (48) est situé en aval de l'unité de nettoyage (11).
